(19) Europäisches Patentamt / European Patent Office / Office européen des brevets

(11) **EP 4 752 021 A1**

(12) **DEMANDE DE BREVET EUROPEEN**

(43) Date de publication:
**03.06.2026 Bulletin 2026/23**

(21) Numéro de dépôt: **25220187.6**

(22) Date de dépôt: **02.12.2025**

(51) Classification Internationale des Brevets (IPC):
**B60W 30/14** *(2006.01)*

(52) Classification Coopérative des Brevets (CPC):
**B60W 30/143;** B60W 2510/0695; B60W 2510/088;
B60W 2520/10; B60W 2530/10; B60W 2530/20;
B60W 2552/15; B60W 2552/40; B60W 2554/406;
B60W 2710/0666; B60W 2710/083; B60W 2710/18;
B60W 2720/106

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **02.12.2024 FR 2413311**

(71) Demandeur: **AMPERE s.a.s.**
**92100 Boulougne-Billancourt (FR)**

(72) Inventeurs:
• **DAVINS, Joan**
**31300 Toulouse (FR)**
• **KVIESKA, Pedro**
**78084 GUYANCOURT (FR)**
• **PEYRET, Maud**
**78084 GUYANCOURT (FR)**

(74) Mandataire: **Renault Group**
**Renault s.a.s.**
**1 avenue du Golf**
**FR TCR AVA 055**
**78084 Guyancourt Cedex (FR)**

(54) **PROCÉDÉ ET DISPOSITIF DE RÉGULATION DE LA VITESSE D'UN VÉHICULE AUTOMOBILE EN FONCTION DE L'ADHÉRENCE DU VÉHICULE À LA ROUTE**

(57) L'invention porte sur un procédé de régulation, par un dispositif informatique embarqué à bord d'un véhicule automobile, de la vitesse du véhicule lorsqu'il circule sur une route. L'invention concerne également un dispositif informatique (100) mettant en œuvre un tel procédé, ainsi qu'un véhicule automobile (1) comprenant un tel dispositif (100).

[Fig. 1]

## Description

### Domaine technique de l'invention

La présente invention concerne le domaine des régulateurs de vitesse des véhicules automobiles. L'invention concerne en particulier un procédé de régulation, par un dispositif informatique embarqué à bord d'un véhicule automobile, de la vitesse du véhicule lorsqu'il circule sur une route. L'invention concerne également un dispositif informatique mettant en œuvre un tel procédé, ainsi qu'un véhicule automobile qui comprend un tel dispositif.

### État de la technique antérieure

La plupart des véhicule automobiles modernes sont équipés d'un régulateur de vitesse. Généralement, un régulateur de vitesse adaptatif contrôle la vitesse du véhicule pour conserver une distance confortable et sécuritaire par rapport à un véhicule précédent ou, en l'absence de véhicule précédent, pour maintenir une vitesse de consigne. En fonction de la vitesse courante et de la vitesse de consigne, des accélérations/décélérations sont calculées puis converties en commandes de couple qui sont transmises aux actionneurs du véhicule (i.e. GMP, freins).

Généralement, le régulateur de vitesse est configuré pour appliquer des valeurs d'accélération comprises entre -3.5m/s2 et +-3.5m/s2 afin de produire une conduite souple et confortable. Cependant, les conditions d'adhérence du véhicule à la route ne sont pas prises en compte pour le calcul de ces valeurs. Or, si en conditions nominales il est en effet raisonnable de supposer qu'un véhicule est en mesure de pouvoir réaliser ces valeurs d'accélérations, cela peut en revanche s'avérer impossible lorsque les conditions d'adhérence sont dégradées (e.g. chaussée humide, enneigée). Cela implique que les régulateurs de vitesse connus ne sont pas capables de réguler correctement la vitesse quelles que soient les conditions d'adhérence.

### Résumé de l'invention

L'invention vise à résoudre ce problème. Elle a en particulier pour but de procurer une solution pour réguler la vitesse d'un véhicule automobile de manière correcte quelles que soient les conditions d'adhérence du véhicule à la route. Par ce biais, l'invention a pour objectif de contribuer à une amélioration de la sécurité de la conduite.

Pour atteindre ces buts, l'invention concerne, selon un premier aspect, un procédé de régulation, par un dispositif informatique embarqué à bord d'un véhicule automobile, de la vitesse du véhicule lorsqu'il circule sur une route, le procédé comprenant les étapes de :

    i) obtenir des données caractérisant une valeur de l'adhérence du véhicule à la route ;
    ii) déterminer des données caractérisant une valeur d'accélération maximale atteignable en fonction des données obtenues au cours de l'étape i) ; et
    iii) gérer le fonctionnement d'au moins un actionneur du véhicule en fonction d'une commande de couple établie en fonction des données déterminées au cours de l'étape ii).

Selon une variante, l'étape ii) peut comprendre les étapes de :

- déterminer des données caractérisant une valeur de couple maximal atteignable en fonction des données obtenues au cours de l'étape i) ; et
- déterminer les données caractérisant une valeur d'accélération maximale atteignable en fonction des données caractérisant une valeur de couple maximal atteignable, du rayon d'une roue du véhicule et de la masse du véhicule.

Selon une autre variante, l'étape iii) peut comprendre les étapes de :

- obtenir des données caractérisant une valeur de la vitesse courante du véhicule ;
- obtenir des données caractérisant une valeur d'accélération souhaitable déterminée en fonction des données caractérisant une valeur d'une vitesse de consigne et de données caractérisant une valeur de la vitesse courante du véhicule ; et
- déterminer des données caractérisant une valeur d'accélération utilisable pour établir la commande de couple en fonction des données caractérisant une valeur d'accélération souhaitable, des données caractérisant une valeur d'accélération maximale atteignable et d'au moins une modélisation du véhicule.

Selon encore une autre variante, les données caractérisant une valeur d'accélération utilisable pour établir la commande de couple peuvent être déterminées en fonction de données caractérisant au moins une perturbation influençant le couple disponible.

Selon encore une autre variante, la commande de couple peut être déterminée en fonction des données caractérisant au moins une perturbation influençant le couple disponible.

Selon encore une autre variante, la perturbation peut concerner la pente de la route, une force aérodynamique ou l'inertie du moteur du véhicule.

Selon encore une autre variante, les données caractérisant une valeur de l'adhérence du véhicule à la route peuvent être obtenues en interagissant avec un serveur distant du véhicule et/ou un correcteur électronique de trajectoire du véhicule.

Selon un deuxième aspect, l'invention concerne un dispositif de régulation de la vitesse d'un véhicule automobile lorsqu'il circule sur une route, le dispositif comprenant au moins une unité de traitement d'informations, comprenant au moins un processeur, et un support de stockage de données configurés pour mettre en œuvre un procédé tel que décrit ci-dessus.

Selon un troisième aspect, l'invention concerne un programme d'ordinateur comprenant des instructions de code de programme pour l'exécution des étapes d'un procédé tel que décrit ci-dessus lorsque ledit programme est exécuté par au moins un processeur.

Selon un quatrième aspect, l'invention concerne un support utilisable dans un ordinateur sur lequel un programme tel que décrit ci-dessus est enregistré.

Selon un cinquième aspect, l'invention concerne un véhicule automobile qui comprend un dispositif tel que décrit ci-dessus.

**Brève description des figures**

D'autres caractéristiques et avantages de l'invention apparaîtront à l'examen de la description détaillée ci-après, et des figures annexées, dans lesquelles :

[Fig. 1] est un schéma d'un véhicule automobile selon l'invention ;
[Fig. 2] est un diagramme fonctionnel d'un dispositif selon l'invention ;
[Fig. 3] est un logigramme des étapes d'un procédé selon l'invention ;
[Fig. 4] est un diagramme fonctionnel illustrant la mise en œuvre d'au moins une étape du procédé selon l'invention ;
[Fig. 5] sont des graphiques qui illustrent le fonctionnement d'un véhicule automobile équipé d'un régulateur de vitesse classique lorsque les conditions d'adhérence du véhicule à la route sont optimales ;
[Fig. 6] sont des graphiques qui illustrent le fonctionnement d'un véhicule automobile équipé d'un régulateur de vitesse classique lorsque les conditions d'adhérence sont dégradées ; et
[Fig. 7] sont des graphiques qui illustrent le fonctionnement du véhicule automobile selon l'invention lorsque les conditions d'adhérence sont dégradées.

**Description détaillée de l'invention**

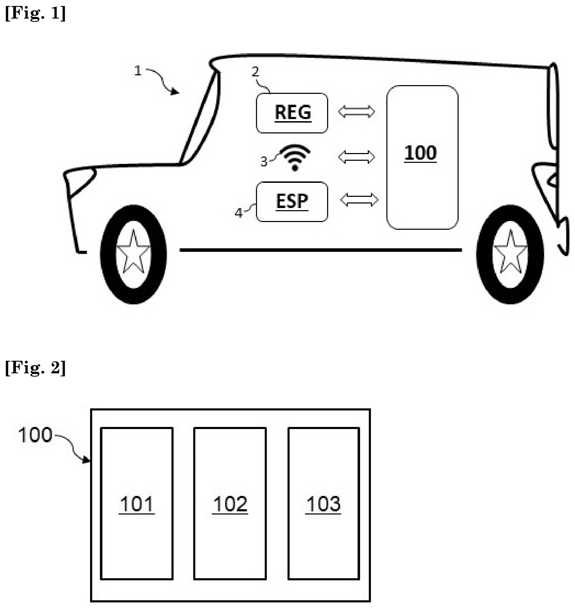

La figure 1 illustre schématiquement un véhicule automobile 1 selon l'invention. Celui-ci est équipé d'un régulateur de vitesse 2, préférentiellement adaptatif, qui permet de réguler la vitesse du véhicule en fonction d'une vitesse de consigne et d'une distance (ou un temps) qui sépare le véhicule 1 et un autre véhicule qui se trouve devant. En outre, le régulateur de vitesse 2 du véhicule 1 selon l'invention est préférentiellement configuré pour être en mesure d'adapter aussi la vitesse du véhicule en fonction d'informations contextuelles qui concernent, par exemple, la présence de certains panneaux de signalisation (limitation de vitesse, type de route, etc.), la présence de certaines installations (rond points, sens giratoires, priorités à droite, voies d'insertion, etc.) ou des perturbations en cours (accidents, bouchons etc.). Le véhicule selon l'invention comprend également un appareillage de communication par signaux radiofréquences 3 afin de pouvoir communiquer (i.e. envoyer et recevoir des données) avec une entité communicante distante au moyen de protocoles et réseaux de communication sans fil conventionnels. Il comprend par ailleurs un correcteur électronique de trajectoire 4, qui est capable de déterminer l'adhérence du véhicule 1 à la route.

De manière avantageuse, le véhicule 1 selon l'invention embarque en outre un dispositif 100 de régulation de la vitesse d'un véhicule automobile lorsqu'il circule sur une route au sens de la présente invention, tel que décrit ci-après, qui met en œuvre un procédé de régulation de la vitesse d'un véhicule automobile lorsqu'il circule sur une route au sens de la présente invention, tel que résumé brièvement ci-dessous et décrit en détail plus bas.

Lors de la mise en œuvre du procédé, le dispositif 100 selon l'invention obtient dans un premier temps une valeur de l'adhérence du véhicule 1 à la route. Pour cela, il interagit par exemple avec le correcteur électronique de trajectoire 4 ou, au moyen de l'appareillage de communication par signaux radiofréquences 3, avec un serveur distant du véhicule 1 configuré pour surveiller et établir l'adhérence courante du véhicule 1 à la route. Ensuite, le dispositif 100 selon l'invention établit avantageusement une valeur d'accélération maximale atteignable en fonction de la valeur d'adhérence du véhicule à la route qui a été obtenue. Il gère enfin le fonctionnement d'au moins un actionneur du véhicule 1 en fonction d'une commande de couple qu'il établit en fonction de la valeur d'accélération maximale atteignable précédemment déterminée. Comme on le verra plus bas, c'est ainsi que le dispositif 100 selon l'invention permet de réguler la vitesse du véhicule 1 en tenant compte de l'adhérence du véhicule à la route, et qu'il contribue ainsi à une amélioration de la sécurité de la conduite.

Sur la figure 2 est illustré schématiquement le dispositif 100 selon l'invention de régulation de la vitesse d'un véhicule automobile lorsqu'il circule sur une route. Il s'agit essentiellement d'un appareil informatique, qui comprend au moins une unité de traitement d'informations 101, comportant un ou plusieurs processeurs, un support de stockage de données 102, sur lequel est notamment enregistré un programme qui comprend des instructions de code de programme pour l'exécution des étapes du procédé selon l'invention décrit ci-après, et une interface d'entrée et sortie 103 permettant la réception et l'émission de données.

Préférentiellement, le dispositif 100 selon l'invention est hébergé sur un calculateur indépendant et il interagit par le biais de son interface d'entrée et sortie 103 et au moyen d'un réseau de communication filaire du véhicule (e.g. CAN, Ethernet, MOST) - matérialisé sur la figure 1 par les flèches à double sens - avec le régulateur de vitesse 2, avec l'appareillage de communication par signaux radiofréquences 3 et avec le correcteur électronique de trajectoire 4. Alternativement, le dispositif 100 selon l'invention fait partie intégrante du régulateur de vitesse 2. De ce fait, le dispositif 100 selon l'invention peut, notamment, obtenir des données caractérisant une valeur de l'adhérence du véhicule à la route et il peut gérer le fonctionnement d'au moins un actionneur du véhicule.

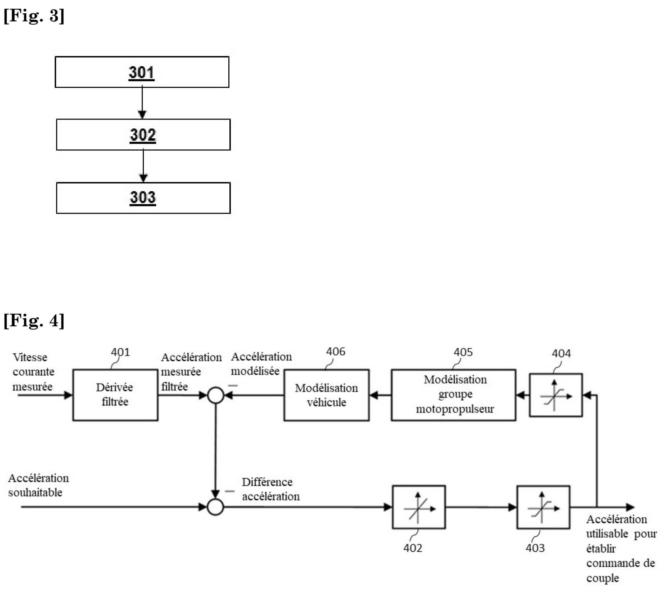

Selon l'invention, tous les éléments décrits ci-dessus contribuent pour permettre la mise en œuvre d'un procédé de régulation de la vitesse d'un véhicule automobile lorsqu'il circule sur une route, tel que décrit ci-dessous en lien avec les figures 3-7.

La figure 3 illustre au moyen d'un logigramme les étapes du procédé selon l'invention.

Selon une première étape 301 du procédé selon l'invention, le dispositif 100 selon l'invention obtient des données caractérisant une valeur de l'adhérence du véhicule à la route. Pour cela, il interagit avec le correcteur électronique de trajectoire 4 ou, au moyen de l'appareillage de communication par signaux radiofréquences 3, avec un serveur distant du véhicule 1 qui est configuré pour surveiller et établir l'adhérence du véhicule 1 à la route sur laquelle le véhicule circule. Ainsi, au terme de cette première étape du procédé, le dispositif 100 selon l'invention détient avantageusement des données qui définissent une valeur de l'adhérence du véhicule 1 à la route à l'instant courant.

Ensuite, selon une deuxième étape 302 du procédé selon l'invention, le dispositif 100 selon l'invention détermine des données caractérisant une valeur d'accélération maximale atteignable en fonction des données obtenues au cours de l'étape précédente, autrement dit de l'adhérence du véhicule à la route. Pour cela, il utilise un modèle de pneumatique, par exemple le modèle de Dugoff, afin d'estimer les forces appliquées à chacune des roues du véhicules en fonction de l'adhérence du véhicule 1 à la route. Pour chacune des roues (i,j), le dispositif 100 selon l'invention détermine ainsi une estimation de la force latérale $F_{y,ij}$ et de la force verticale $F_{z,ij}$ qui sont appliquées au point de contact du pneu en fonction de l'adhérence courante du véhicule 1 à la route qui a été obtenue au cours de l'étape précédente.

Ensuite, en utilisant le concept d'ellipse de friction, le dispositif 100 selon l'invention détermine la force maximale qui peut passer à la roue à l'instant t. Ainsi, pour chacune des roues, on a :

$$F_{x,ij}^2 + F_{y,ij}^2 \leq \left( \mu F_{z,ij} \right)^2$$

où $\mu$ est l'adhérence du véhicule à la route qui a été obtenue au cours de l'étape précédente du procédé et $F_{x,ij}$ est la force maximale qui peut passer à la roue à l'instant t. Il en découle que :

$$F_{x,ij} \leq \sqrt{ \left( \mu F_{z,ij} \right)^2 - F_{y,ij}^2 }$$

Le dispositif 100 selon l'invention détermine ensuite le couple maximal atteignable, autrement dit une valeur du couple maximal que l'on peut faire passer aux roues avant, $\Gamma_{front}$. Pour cela, il résout l'équation suivante :

$$\Gamma_{front} = R \times \left( F_{x,fl,max} + F_{x,fr,max} \right)$$

où R est le rayon de la roue, $F_{x,fl,max}$ est la force appliquée à la roue avant gauche et $F_{x,fr,max}$ est la force appliquée à la roue avant droite.

On notera que la formule ci-dessus s'applique à un véhicule à deux roues motrices. De manière similaire, pour un véhicule à n roues motrices, on obtient :

$$\Gamma_{roues\_motrices} = R \times \sum_{i=1}^{n} F_{x,i,max}$$

où $F_{x,i,max}$ est la force appliquée à la roue i.

Ensuite, le dispositif 100 selon l'invention utilise la valeur de couple maximal atteignable ainsi établie pour déterminer la valeur d'accélération maximale atteignable. Pour cela, il utilise la masse du véhicule en résolvant l'équation suivante :

$$\Gamma_{front} = R \times masse\_v\acute{e}hicule \times acc\acute{e}l\acute{e}ration\_maximale\_atteignable$$

Ainsi, au terme de cette deuxième étape du procédé, le dispositif 100 selon l'invention a déterminé une valeur d'accélération maximale atteignable qui dépend avantageusement de l'adhérence courante du véhicule 1 à la route.

Selon une troisième étape 303 du procédé selon l'invention, le dispositif 100 selon l'invention gère le fonctionnement d'au moins un actionneur du véhicule en fonction d'une commande de couple établie en fonction des données déterminées au cours de l'étape précédente du procédé, autrement dit de la valeur d'accélération maximale atteignable qui a été établie en fonction de l'adhérence du véhicule à la route. Pour cela, le dispositif 100 selon l'invention procède de la manière suivante.

Dans un premier temps, le dispositif 100 selon l'invention interagit avec le régulateur de vitesse 2 afin d'obtenir des données caractérisant une valeur d'accélération souhaitable que le régulateur de vitesse 2 établit en fonction d'une vitesse de consigne, qui est déterminée par exemple en fonction de la distance qui sépare le véhicule 1 et un véhicule situé devant et d'une vitesse courante du véhicule 1. Pour cela, le régulateur de vitesse 2 comprend, par exemple, un premier contrôleur de type feedforward qui reçoit en entrée la vitesse de consigne et qui est couplé à un deuxième contrôleur de type feedback proportionnel, ce dernier recevant en entrée une comparaison entre la vitesse courante du véhicule et une valeur de vitesse anticipée établie par le contrôleur feedforward. La sortie du contrôleur feedforward et celle du contrôleur feedback proportionnel sont combinées pour établir la valeur d'accélération souhaitable qui est obtenue par le dispositif 100 selon l'invention. C'est l'accélération que l'on souhaite appliquer compte tenu de la vitesse de consigne et de la vitesse courante du véhicule mais sans tenir compte encore à ce stade de l'adhérence du véhicule 1 à la route.

Ensuite, le dispositif 100 selon l'invention détermine des données caractérisant une valeur d'accélération utilisable pour établir la commande de couple en fonction des données caractérisant une valeur d'accélération souhaitable, des données caractérisant une valeur d'accélération maximale atteignable et d'au moins une modélisation du véhicule. Pour cela, le dispositif 100 selon l'invention procède de la manière illustrée schématiquement par le diagramme fonctionnel représenté sur la figure 4.

En entrée de la branche du haut, la vitesse courante du véhicule est injectée dans un premier module 401 qui calcule une dérivée filtrée afin d'obtenir l'accélération mesurée à l'instant courant. En bas, la valeur d'accélération souhaitable est reçue en entrée et une soustraction est réalisée entre celle-ci et une valeur qui correspond à la différence entre l'accélération mesurée et une accélération modélisée. On établit ainsi avantageusement une estimation de la divergence entre l'accélération mesurée à l'instant courant et l'accélération que l'on souhaite obtenir. En suivant la branche du bas, cette divergence est saturée une première fois au moyen d'un deuxième module 402, qui utilise une première fonction, par exemple une fonction affine, établie en fonction de l'accélération maximale atteignable déterminée au cours de la deuxième étape du procédé. A la sortie de ce deuxième module 402, un troisième module 403 applique une deuxième saturation au moyen d'une deuxième fonction, par exemple une fonction affine sur un premier intervalle de valeurs et constante sur un deuxième intervalle de valeurs qui est également établie en fonction de l'accélération maximale atteignable obtenue au cours de la deuxième étape du procédé. En remontant vers la branche du haut, la sortie du troisième module 403 entre dans un quatrième module 404, qui applique une troisième saturation au moyen d'une troisième fonction, par exemple une fonction affine sur un premier intervalle de valeurs et constante sur un deuxième intervalle de valeurs qui est également établie en fonction de l'accélération maximale atteignable obtenue au cours de la deuxième étape du procédé. De manière avantageuse, ces diverses saturations qui sont réalisées par le deuxième 402, le troisième 403 et le quatrième module 404 permettent de prendre en compte différents besoins, par exemple le besoin de permettre une conduite économe en énergie. La sortie du quatrième module 404 entre dans un cinquième module 405, qui modélise le groupe motopropulseur du véhicule. Enfin, un sixième module 406 modélise le véhicule, notamment sa faculté à fournir une accélération. En sortie de ce sixième module 406, une estimation d'accélération que le véhicule peut fournir et qui tient compte de l'accélération maximale atteignable est soustraite à l'accélération mesurée qui sort du premier module 401, comme déjà évoqué ci-dessus.

Comme on le comprend, cette boucle offre avantageusement le comportement d'un régulateur intégral. En effet, une différence entre l'accélération mesurée et celle estimé va progressivement être compensée. L'idée sous-jacente est que si le véhicule peut accélérer plus qu'il n'accélère, alors on peut augmenter l'accélération, et ce jusqu'à saturation par l'accélération maximale atteignable qui est prise en compte par le deuxième 402, le troisième 403 et le quatrième module 404. On obtient ainsi en sortie de cette boucle une valeur d'accélération qui peut être utilisée pour gérer le fonctionnement d'un actionneur du véhicule 1.

Selon une alternative de réalisation, les saturations appliquées par le deuxième 402, le troisième 403 et le quatrième module 404 tiennent également compte de perturbations qui influencent le couple disponible. De telles perturbations concernent, par exemple, la pente de la route, une force aérodynamique ou l'inertie du véhicule. Ainsi, selon cette alternative, le dispositif 100 selon l'invention détermine une première valeur de couple liée à la pente de la route, en interagissant pour cela avec un capteur qui mesure l'inclinaison du véhicule. Parallèlement, il détermine une deuxième valeur de couple liée aux forces aérodynamiques en fonction du coefficient $S_{cx}$ du véhicule et de sa vitesse. En outre, il détermine une troisième valeur de couple liée à l'inertie du moteur en fonction de la vitesse du véhicule 1. Ces valeurs de couples sont converties en valeurs d'accélération en utilisant le calcul explicite en lien avec la première étape du procédé au sein duquel interviennent le rayon des roues et la masse du véhicule 1. Ces valeurs d'accélération dues aux perturbations sont alors utilisées au sein du deuxième 402, du troisième 403 et du quatrième module 404. On obtient ainsi une valeur de saturation maximale, qui correspond à l'accélération maximale atteignable en fonction de l'adhérence du véhicule à la route déterminée au cours de la deuxième étape du procédé à laquelle on soustrait les valeurs d'accélération dues aux perturbations, et une valeur de saturation minimale, qui correspond à l'accélération maximale atteignable selon l'adhérence du véhicule à la route multipliée par moins un à laquelle on soustrait les valeurs d'accélération dues aux perturbations. Par exemple, si la valeur d'accélération maximale atteignable qui a été déterminée est de 1 m/s² et que les perturbations correspondent à -0.2 m/s², la valeur de saturation minimale sera -1,2 m/s² tandis que la valeur de saturation maximale sera de 0,8 m/s².

Selon une autre alternative de réalisation, le dispositif 100 selon l'invention pondère également la commande de couple qui est établie en fonction de l'accélération établie en sortie de la boucle en tenant compte de ces mêmes perturbations. Toutes les valeurs de couples dues à la pente de la route, aux forces aérodynamiques et à l'inertie du moteur sont ainsi additionnées et la somme de ces perturbations est ajoutée à la commande de couple établie en fonction de l'accélération fournie en sortie de la boucle.

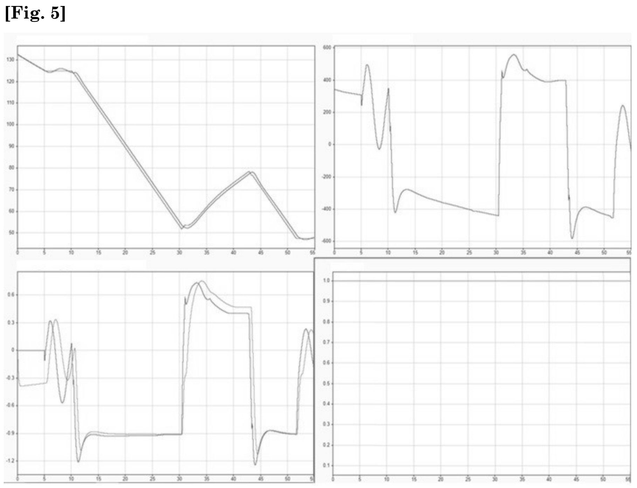

Pour plus de clarté, on a représenté sur la figure 5 le fonctionnement d'un véhicule automobile équipé d'un régulateur de vitesse classique lorsque l'adhérence du véhicule à la route est égale à 1, autrement dit lorsque les conditions d'adhérence sont optimales. Le graphique en haut à gauche montre la vitesse demandée par le régulateur de vitesse et la vitesse réelle du véhicule. Le graphique en haut à droite montre le couple demandé. Le graphique en bas à gauche montre l'accélération demandée et l'accélération réelle du véhicule. Le graphique en bas à droite montre l'adhérence du véhicule à la route. Comme on le constate, le suivi de la vitesse demandée est correct et l'accélération demandée peut à tout instant être réalisée.

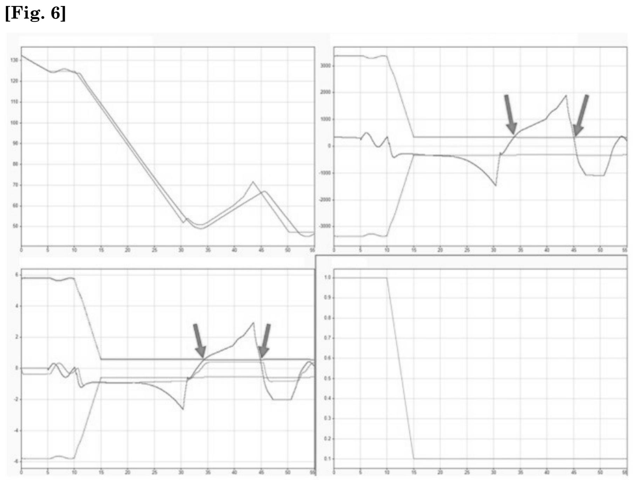

On a représenté de la même manière sur la figure 6 le fonctionnement d'un véhicule automobile équipé d'un régulateur de vitesse classique lorsque l'adhérence du véhicule à la route est dégradée (elle chute de 1 à 0,1). On voit que sur le graphique en haut à droite que le véhicule n'est pas en mesure d'appliquer le couple demandé du fait de la chute de l'adhérence du véhicule à la route (le couple applicable est restreint entre -250 N m et 250 N m du fait de la perte d'adhérence). Ainsi, comme on le voit sur le graphique en haut à gauche, le véhicule n'est pas en mesure de suivre la vitesse demandée. En outre, comme on le voit sur le graphique en bas à gauche, la boucle du régulateur continue d'intégrer à une valeur supérieure à celle physiquement possible. Et quand il y a une demande de freinage qui arrive alors que l'accélération demandée est supérieure au seuil, il faut que l'intégrateur revienne vers le bas et pendant ce temps le véhicule ne freine pas et continue d'accélérer. On voit sur ce graphique aux endroits marqués pas les flèches que l'accélération est au-dessus du seuil pendant environ 11 secondes et il faut environ 2 secondes pour que la consigne avec dérivée négative revienne dans la zone applicable. On aurait un comportement similaire dans le cas d'une demande d'accélération positive lors d'un freinage avec un couple inférieur au seuil bas.

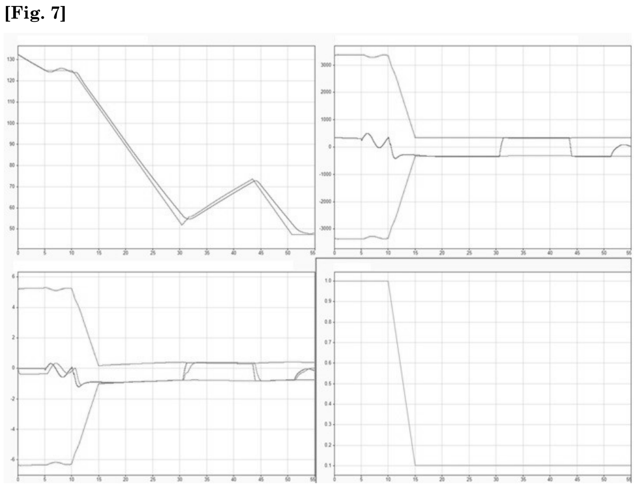

On a représenté sur la figure 7 la même situation de perte d'adhérence gérée par le véhicule 1 selon l'invention qui comprend un régulateur de vitesse qui incorpore ou interagit avec le dispositif 100 selon l'invention. On voit que comme le véhicule ne peut pas appliquer tout le couple demandé à partir de l'instant auquel l'adhérence du véhicule à la route chute (graphique en haut à droite), l'accélération est saturée (graphique en bas à gauche). Ainsi, l'accélération ne dépasse pas l'accélération maximale atteignable, ce qui fait que l'intégrateur est correctement saturé. Par la suite, lors d'une demande de freinage, la vitesse commence immédiatement à décroître sans besoin d'attendre que l'intégrateur revienne vers cette valeur. Le véhicule 1 selon l'invention peut ainsi avantageusement produire la vitesse qui est demandée malgré la chute d'adhérence.

Ainsi, grâce au procédé et au dispositif selon l'invention décrits ci-dessus, une solution est fournie pour réguler la vitesse d'un véhicule automobile de manière correcte quelles que soient les conditions d'adhérence du véhicule à la route. C'est ainsi que le procédé et le dispositif selon l'invention contribuent à une amélioration de la sécurité de la conduite.

**Revendications**

1. Procédé de régulation, par un dispositif informatique embarqué à bord d'un véhicule automobile, de la vitesse du véhicule lorsqu'il circule sur une route, le procédé comprenant les étapes de :

   i) obtenir des données caractérisant une valeur de l'adhérence du véhicule à la route ;
   ii) déterminer des données caractérisant une valeur d'accélération maximale atteignable en fonction des données obtenues au cours de l'étape i) ; et
   iii) gérer le fonctionnement d'au moins un actionneur du véhicule en fonction d'une commande de couple établie en fonction des données déterminées au cours de l'étape ii),

   **caractérisé en ce que** l'étape ii) comprend les étapes de :

   • déterminer des données caractérisant une valeur de couple maximal atteignable en fonction des données obtenues au cours de l'étape i) ; et
   • déterminer les données caractérisant une valeur d'accélération maximale atteignable en fonction des données caractérisant une valeur de couple maximal atteignable, du rayon d'une roue du véhicule et de la masse du véhicule.

2. Procédé selon la revendication 1, **caractérisé en ce que** l'étape iii) comprend les étapes de :

   • obtenir des données caractérisant une valeur de la vitesse courante du véhicule ;
   • obtenir des données caractérisant une valeur d'accélération souhaitable déterminée en fonction des données caractérisant une valeur d'une vitesse de consigne et de données caractérisant une valeur de la vitesse courante du véhicule ; et
   • déterminer des données caractérisant une valeur d'accélération utilisable pour établir la commande de couple en fonction des données caractérisant une valeur d'accélération souhaitable, des données caractérisant une valeur d'accélération maximale atteignable et d'au moins une modélisation du véhicule.

3. Procédé selon la revendication 2, **caractérisé en ce que** les données caractérisant une valeur d'accélération utilisable pour établir la commande de couple sont déterminées en fonction de données caractérisant au moins une perturbation influençant le couple disponible.

4. Procédé selon la revendication 3, **caractérisé en ce que** la commande de couple est déterminée en fonction des données caractérisant au moins une perturbation influençant le couple disponible.

5. Procédé selon l'une des revendications 3 ou 4, **caractérisé en ce que** la perturbation concerne la pente de la route, une force aérodynamique ou l'inertie du moteur du véhicule.

6. Procédé selon l'une des revendications précédentes, **caractérisé en ce que** les données caractérisant une valeur de l'adhérence du véhicule à la route sont obtenues en interagissant avec un serveur distant du véhicule et/ou un correcteur électronique de trajectoire du véhicule.

7. Dispositif (100) de régulation de la vitesse d'un véhicule automobile lorsqu'il circule sur une route, **caractérisé en ce que** le dispositif comprend au moins une unité de traitement d'informations (101), comprenant au moins un processeur, et un support de stockage de données (102) configurés pour mettre en œuvre un procédé selon l'une quelconque des revendications précédentes.

8. Programme d'ordinateur comprenant des instructions de code de programme pour l'exécution des étapes d'un procédé selon l'une quelconque des revendications 1 à 6 lorsque ledit programme est exécuté par au moins un processeur.

9. Support utilisable dans un ordinateur, **caractérisé en ce qu'**un programme selon la revendication 8 y est enregistré.

10. Véhicule automobile, **caractérisé en ce qu'**il comprend un dispositif selon la revendication 7.

[Fig. 1]

[Fig. 2]

[Fig. 3]

[Fig. 4]

[Fig. 5]

[Fig. 6]

[Fig. 7]

Europäisches
Patentamt

European
Patent Office

Office européen
des brevets

# RAPPORT DE RECHERCHE EUROPEENNE

Numéro de la demande

EP 25 22 0187

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2022/204017 A1 (BARTON-SWEENEY ANDREW [US] ET AL) 30 juin 2022 (2022-06-30) * alinéas [0021], [0040] - [0072] * ----- | 1-10 | INV. B60W30/14 |
| A | DE 10 2018 219283 A1 (ZAHNRADFABRIK FRIEDRICHSHAFEN [DE]) 14 mai 2020 (2020-05-14) * alinéa [0028] * ----- | 1-10 | |

DOMAINES TECHNIQUES RECHERCHES (IPC)

B60W

Le présent rapport a été établi pour toutes les revendications

| Lieu de la recherche | Date d'achèvement de la recherche | Examinateur |
|---|---|---|
| Munich | 6 février 2026 | Müller-Nagy, Andrea |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 0187

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2026

| Document brevet cité au rapport de recherche | Date de publication | Membre(s) de la famille de brevet(s) | | Date de publication |
|---|---|---|---|---|
| US 2022204017 A1 | 30-06-2022 | US | 2022204017 A1 | 30-06-2022 |
| | | US | 2023249709 A1 | 10-08-2023 |
| | | WO | 2022146604 A1 | 07-07-2022 |
| DE 102018219283 A1 | 14-05-2020 | AUCUN | | |

Pour tout renseignement concernant cette annexe : voir Journal Officiel de l'Office européen des brevets, No.12/82